# EUROPEAN PATENT APPLICATION

(11) **EP 1 000 537 A2**
(43) Date of publication of application: **17.05.2000**
(21) Application number: 99122031.0
(22) Date of filing: 15.11.1995
(51) Int. Cl.: A01K 1/01

(54) **Cat litter-tray**

(62) Divisional of application: 95936747.5
(71) Applicant: Verrecchia, Paolo, 40121 Bologna (IT); Serbassi, Silvio, 00185 Roma (IT); Tamba, Nagib Gebraeil, 00153 Roma (IT)
(72) Inventor: Tamba, Nagib Gebraeil, 00153 Roma (IT)
(74) Representative: Cioni, Carlo

(57) **Abstract**

Litter-tray for the collection and disposal of cat excreta. This semiautomatic device is characterised by the litter-tray being separated from the granule washing machine, this latter being manually loaded with the soiled granules.

## Description

The present invention relates to a litter-tray for cats which, by the quick and easy removal of the cat excreta and the cleaning of the litter-tray itself, drastically reduces the most inconvenient and unpleasant aspect of keeping a cat in the home.

As is known, the practice of keeping small domestic animals (such as cats) at home is spreading; there is a resulting growth in the market for foods and other accessories needed for keeping these small animals, among which is the litter-tray for the collection and disposal of excreta.

Now, however, it is also known that the main obstacle to an even the greater spread of the said habit is, without doubt, the removal and disposal of the excreta from the litter-tray, together with the cleaning of the latter, which at present requires long, painstaking and unpleasant cleaning operations which must be repeated frequently in order to prevent the cat soiling elsewhere, in case of necessity, because it does not like to use a dirty litter-tray.

In the present technology, the litter-tray usually comprises a simple tray or open box into which a layer of granular material (known as granules) is introduced and onto which the cat satisfies its bodily requirements.

After each use of such a litter-tray by the cat, it is necessary to remove all the soiled granules immediately with a spatula so that the unsoiled granules can continue to be used; the soiled granules must be sealed in a bag to prevent the unpleasant smell spreading through the home and the bag must be deposited in the garbage collection bins thus adding to the weight of garbage to be removed; the bed of the tray itself must be cleaned and any wet parts dried; fresh granules must be added to replace those removed; the cost of all this cannot be ignored.

US-A-5211133 discloses a litter-tray for the collection and disposal of cat excreta comprising a tray or open box in which a layer of granules is deposited, whereby the granules are being contained in a removable net of fine mesh (18, 46) smaller than the grain-size of the same granules and having rim handles (42) for its removal by hand, the said net being inserted into the tray. Within the said granules is also buried a rigid grille of mesh (44) to support the weight of cat and granules. The tray includes a double bottom to collect liquids in which an antifermentative substance as vinegar can be added.

WO-A-91/15114 discloses a litter-tray for the collection and disposal of cat excreta comprising a tray in which a layer of granules is deposited and a removable grill having a mesh larger than the grain size of the said granules is buried within the such layer of granules. The grill has rim handles to facilitate its removal by hand.

DE-U-8900398 discloses a litter-tray for the collection and disposal of cat excreta comprising a tray or open box in which a layer of granules is deposited, a sensor for the presence of a cat connected via a delay-timer to a programmer, a door mechanism fitted with a means of hermetic sealing and reopening of the tray under the control of said programmer, an inlet from the water mains to send water on said layer of granules for such length of time a shall be determined by said programmer (12) and a heating element to heat the drying air.

The object of the present invention is to provide a litter-fray for cats which, by using a special washing machine, allows the granule reuse for many times, and allows the cat excreta to be disposed of in the same way as domestic waste water without adding to the weight which has to be removed by the municipal garbage disposal service, all without disturbing the cat, which can continue to behave as before.

This is made possible in the present invention using either a tray as commonly used, or a conventional one, or a special tray provided with a double bottom to collect the liquid excreta of the animal preventing the unpleasant smell spreading through the home. It is also possible to add in the double bottom of said box some antifermentative additive in order to prevent cat urine decomposition. It is evident that when discharging the dirty granules from the box, the user shall also empty said double-bottom and rinse it with running water.

The equipment of the invention is also provided of a specific apparatus, separated from the litter tray, called "granule washing machine", connected to the water and power supply as well as the waste-pipe, in which one or more loads of soiled granules are collected and subject to hot water and detergent washing and subsequent drying.

At the end of the above treatment the granules are ready for further use. It is evident that the above treatment are made possible only by the use of non-porous granules.

The granule washing machine consists of a box equipped with a rear hinged cover allowing the introduction of a perforated bottom basket containing the spoiled granules.

After addition of detergent, closing the cover and starting the washing cycle, a specific electrovalve allows the admittance of the water from the mains supply (in order to save time the apparatus may be connected to the hot water supply), up to a predefined level, checked by a specific sensor. Thereafter water and granules are subjected to a strong stirring generated by a blade mechanical stirrer or, according to another embodiment of the invention, by a hydraulic pump. On the bottom of the box a thermostated heating resistance rises the bath temperature up to a complete sterilisation thereof At the end of the washing cycle, a pump discharges the liquid from the washing machine. Then a series of rinsing cycle with hot water under mechanical stirring is started. At the end a heater fan will dry the granules directly in the basket therefore making them ready for reuse.

It is evident that, if the washing machine is designed for its use in a position higher than the waste-pipe level, a gravity discharge may be provided without any electropump action. Is also evident that according to a preferred embodiment of the invention the cover may contain an automatic detergent dispenser and a programming board to modify the cycle and/or the physical variables of the cycle itself.

According to another characteristic of the present invention, the said granules are made from particles of an inert, non-porous (and thus non-absorbing) material, of any shape but without sharp edges or rough surfaces, preferably spherical or disc-shaped, measuring from 1 to 6 mm in diameter and denser than water.

The said material might be glass, ceramic, porcelain, plastic or stone, etc.

It is evident that in such an embodiment the combined action of the water, any detergent, the heat and mechanical agitation of the granules by the jets would certainly completely dissolve the excreta, both solid and liquid, which can then be disposed of via a domestic waste-pipe as happens with a dish-washer, without any danger of clogging the said waste-pipe.

Furthermore, to assist in the breakdown of solid excreta there is provision in a preferred embodiment of the present invention for the addition to the said granules in the washing machine of a quantity of grinding beads about 10-15 mm in diameter, which act as a mill in the turbulence caused by the jets of water.

The invention will now be described with reference to the attached drawings which show preferred forms of practical embodiments. It is further evident that, although reference is made only to liner-trays for cats, the present invention can be for any small domestic animal that normally leaves both solid and liquid excreta in litter-trays.

In the said drawings:

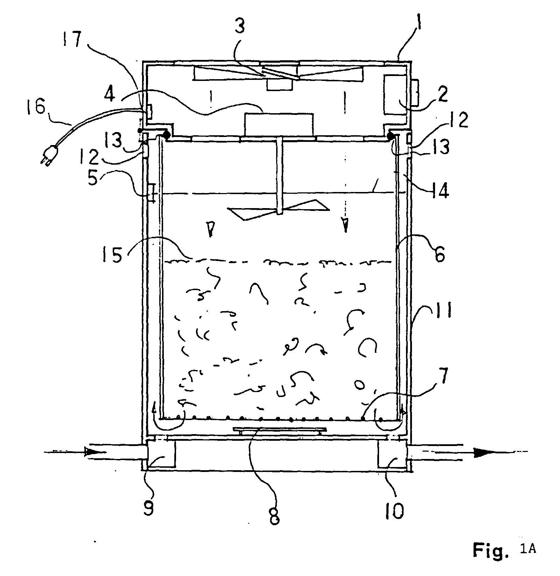

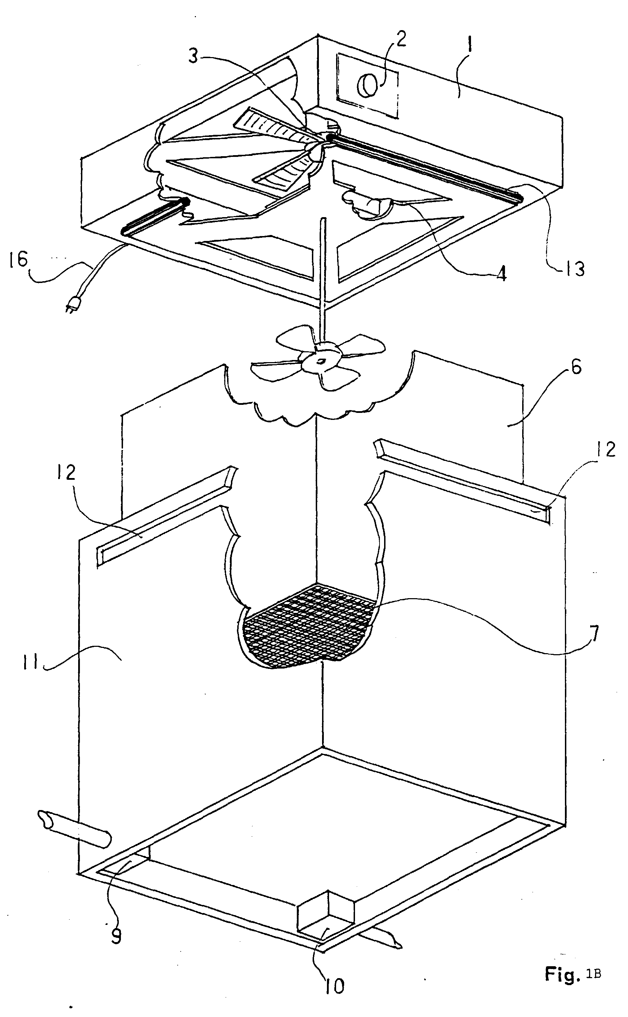

Fig. 1A shows a cross-section of the granule washing machine
Fig. 1B is an exploded perspective view of said machine

With reference to fig. 1A, 1 is the washing machine cover frame; 2 is the starting and programming board; 3 is the heater fan for the granule drying, 4 is the electrical blade stirrer to stir the bath; 5 is the water level electrovalve; 6 is the frame of the perforated bottom inner basket 7; 8 is the heating resistance for the bath heating; 9 is the electrovalve controlling the inlet of the hot water; 10 is the electropump for the washing machine emptying; 11 is the external frame of the washing machine; 12 are the exhaust ducts for the drying air forced by the heater fan; 13 are the sealing gaskets compelling air to exit through the perforated bottom 7 and then through the exhaust ducts 12; 14 indicates the water level; 15 is the granule level; 16 is the connection to the power supply; 17 is the safety fuse.

The semi-automatic mode of operation of a litter-tray and washing machine thus conceived is now evident.

After the cat has deposited his excrement on the granules, we shall take the litter tray and pour the soiled granules onto the washing machine. This machine acts as a normal dish-washing machine. After the end of the washing cycle we can reutilize the granules in the litter tray.

## Claims

1. Device for the collection and disposal of cat excreta comprising a litter-tray and a granule washing machine, manually loaded with the soiled granules, the granule washing machine having an external and cover frame (1, 6), a starting and programming board (2), a heater fan (3) for the granule drying, an electrical blade stirrer (4) to stir the bath, a water level electrovalve (5), a heating resistance (8) for the bath heating, an electropump (10) for the washing action and for the washing machine emptying, carachterized in that the granule washing machine is manually loaded and is separated from the litter tray.

2. Device for the collection and disposal of cat excreta according to claim 1 characterised by the washing machine being equipped by wheels and handles for its easy displacement and provided with rapid couplings for its connection with standard faucets, possibly suitable for being located over a common WC in such a way to discharge the washing waters directly into the waste duct.

3. Device for the collection and disposal of cat excreta according to claim I characterised by the washing machine being stationary and equipped with the same connections as for domestic washing machines.

4. Device for the collection and disposal of cat excreta according to Claims 1 to 3, characterised by the said granules being made from particles of an inert, non-porous (and thus non-absorbing) material, of any shape but not having sharp edges or rough surfaces, measuring from 1 to 6 mm in diameter and denser than water.

5. Device for the collection and disposal of cat excreta according to Claims 1 to 3, characterised by the particles constituting the granules being spherical.

6. Device for the collection and disposal of cat excreta according to claims 1 to 3 characterised in that the granules are distributed in containers constituting the perforated bottom baskets within the granule washing machine.

7. Device for the collection and disposal of cat excreta according to claims 1 to 3, characterised by the particles constituting the granules being disc- or scale-shaped.

8. Device for the collection and disposal of cat excreta according to claims 1 to 3, characterised by the particles constituting the granules being glass.

9. Device for the collection and disposal of cat excreta according to claims 1 to 3, characterised by the particles constituting the granules being porcelain.

10. Device for the collection and disposal of cat excreta according to claims 1 to 3, characterised by the particles constituting the granules being ceramic.

11. Device for the collection and disposal of cat excreta according to claims 1 to 3, characterised by the particles constituting the granules being stone.

12. Device for the collection and disposal of cat excreta according to claims 1 to 3, characterised by the particles constituting the granules being a plastic material.

13. Device for the collection and disposal of cat excreta according to claims 1 to 3, characterised by the addition to the said granules of a quantity of grinding beads about 10 - 15 mm in diameter.

14. Device for the collection and disposal of cat excreta according to any preceding Claim, characterised by being fined with an ultra-sound generator to clean the said granules.

15. Device for the collection and disposal of cat excreta according to any preceding Claim, characterised by being fitted with a micro-wave generator to clean the said granules.
